(19) Europäisches Patentamt / European Patent Office / Office européen des brevets

(11) **EP 2 406 745 B1**

(12) **FASCICULE DE BREVET EUROPEEN**

(45) Date de publication et mention
de la délivrance du brevet:
**11.05.2016 Bulletin 2016/19**

(51) Int Cl.:
*G06F 19/00* *(2011.01)*    *G06K 9/62* *(2006.01)*
*G06T 7/00* *(2006.01)*

(21) Numéro de dépôt: **10715923.8**

(22) Date de dépôt: **12.03.2010**

(86) Numéro de dépôt international:
**PCT/FR2010/050431**

(87) Numéro de publication internationale:
**WO 2010/103248 (16.09.2010 Gazette 2010/37)**

(54) **PROCÉDÉ D'ÉLABORATION D'UN DISPOSITIF DE PRÉDICTION, UTILISATION, SUPPORT DE STOCKAGE D'INFORMATION ET APPAREIL CORRESPONDANTS**

**VERFAHREN ZUR ENTWICKLUNG EINER INFORMATIONSPROGNOSEVORRICHTUNG, IHRE VERWENDUNG UND ZUGEHÖRIGES SPEICHERMEDIUM SOWIE GERÄT**

**METHOD FOR DEVELOPING AN INFORMATION PREDICTION DEVICE, USE THEREOF, AND CORRESPONDING STORAGE MEDIUM AND APPARATUS**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.03.2009 FR 0951556**

(43) Date de publication de la demande:
**18.01.2012 Bulletin 2012/03**

(73) Titulaires:
• **Commissariat à l'Énergie Atomique
et aux Énergies Alternatives
75015 Paris (FR)**
• **Assistance Publique Hôpitaux De Paris
75001 Paris (FR)**

(72) Inventeurs:
• **DUCHESNAY, Edouard
94400 Vitry sur Seine (FR)**
• **PAILLERE, Marie-Laure
75014 Paris (FR)**
• **CACHIA, Arnaud
75014 Paris (FR)**
• **MARTINOT, Jean-Luc
75014 Paris (FR)**
• **ARTIGES, Eric
91310 Longpont (FR)**

(74) Mandataire: **Jacobson, Claude
Cabinet Lavoix
2, Place d'Estienne d'Orves
75441 Paris Cedex 09 (FR)**

(56) Documents cités:
• **LICHEN LIANG ET AL: "Spatial SVM for feature selection and fMRI activation detection" INTERNATIONAL JOINT CONFERENCE ON NEURAL NETWORKS, 2006. IJCNN '06, PISCATAWAY, NJ : IEEE OPERATIONS CENTER, PISCATAWAY, NJ, USA, 16 juillet 2006 (2006-07-16), pages 1463-1469, XP010948192 ISBN: 978-0-7803-9490-2**
• **JULIA NEUMANN ET AL: "Combined SVM-Based Feature Selection and Classification" MACHINE LEARNING, KLUWER ACADEMIC PUBLISHERS-PLENUM PUBLISHERS, NE, vol. 61, no. 1-3, 1 novembre 2005 (2005-11-01), pages 129-150, XP019213494 ISSN: 1573-0565**
• **YONG FAN ET AL: "Detecting Cognitive States from fMRI Images by Machine Learning and Multivariate Classification" COMPUTER VISION AND PATTERN RECOGNITION WORKSHOP, 2006 CONFERENCE ON NEW YORK, NY, USA 17-22 JUNE 2006, PISCATAWAY, NJ, USA,IEEE, PISCATAWAY, NJ, USA, 17 juin 2006 (2006-06-17), pages 89-89, XP010922901 ISBN: 978-0-7695-2646-1**

- "8.2 Feature selection" In: Andrew Webb: "Statistical pattern recognition" 31 décembre 1999 (1999-12-31), Oxford University Press , XP002554368 ISBN: 0340705892 pages 215-226, le document en entier
- MOURAO-MIRANDA ET AL: "Classifying brain states and determining the discriminating activation patterns: Support Vector Machine on functional MRI data" NEUROIMAGE, ACADEMIC PRESS, ORLANDO, FL, US LNKD-DOI:10.1016/J.NEUROIMAGE.2005.06.070, vol. 28, no. 4, 1 décembre 2005 (2005-12-01), pages 980-995, XP005176920 ISSN: 1053-8119
- LUTS ET AL: "A combined MRI and MRSI based multiclass system for brain tumour recognition using LS-SVMs with class probabilities and feature selection" ARTIFICIAL INTELLIGENCE IN MEDICINE, ELSEVIER, NL LNKD-DOI:10.1016/J.ARTMED.2007.02.002, vol. 40, no. 2, 1 juin 2007 (2007-06-01), pages 87-102, XP022101424 ISSN: 0933-3657
- Y.-W. Chen and C.-J. Lin: "Combining SVMs with Various Feature Selection Strategies"[Online] 11 juillet 2005 (2005-07-11), pages 1-10, XP002589783 Extrait de l'Internet: URL:http://www.csie.ntu.edu.tw/~cjlin/pape rs/features.pdf> [extrait le 2010-06-30]
- Anonymous: "Résultat de recherche: Combining SVMs with Various Feature Selection Strategies"[Online] 30 juin 2010 (2010-06-30), XP002589784 Google Extrait de l'Internet: URL:http://www.google.com/search?q=%22Co mb ining+SVMs+with+Various+Feature+Selection+ Strategies%22&hl=en&sa=X&ei=wGYrTO7ZLJik OJ -f4LID&ved=0CAkQpwU&source=Int&tbs=cdr% 3A1 %2Ccd_min%3A2005%2Ccd_max%3A2007> [extrait le 2010-06-30]
- Yi-Wei Chen et al: "Propriétés du document: Combining SVMs with Various FeatureSelection Strategies"[Online] 30 juin 2010 (2010-06-30), XP002589785 NTU CSIE Extrait de l'Internet: URL:http://www.csie.ntu.edu.tw/~cjlin/pape rs/features.pdf>
- MIKOLAJCZYK K ET AL: "A performance evaluation of local descriptors" IEEE TRANSACTIONS ON PATTERN ANALYSIS AND MACHINE INTELLIGENCE, IEEE SERVICE CENTER, LOS ALAMITOS, CA, US LNKD-DOI:10.1109/TPAMI.2005.188, vol. 27, no. 10, 1 octobre 2005 (2005-10-01), pages 1615-1630, XP002384824 ISSN: 0162-8828

**Description**

La présente invention concerne un procédé d'élaboration d'un dispositif de prédiction destiné à prédire un phénotype d'un individu à partir de données d'imagerie dudit individu.

On connaît, en particulier dans le domaine médical, des dispositifs de prédiction basés sur des fonctions prédictives multivariées, comme les classifieurs, qui permettent de prédire des informations sur les phénotypes d'individus, c'est-à-dire des informations sur l'ensemble des traits observables qui caractérisent les êtres vivants, tels que les caractères anatomiques, morphologiques, moléculaires, physiologiques, éthologiques, etc.

Un phénotype à prédire peut également être un diagnostic clinique, par exemple malade/non malade ou encore la réponse d'un patient à un traitement médical.

La prédiction concerne ainsi une information phénotypique qui peut être de différente nature, par exemple de nature biologique, de nature clinique (réponse à un traitement, diagnostic de maladie, etc.) ou encore de nature démographique (âge, sexe, etc.).

On entend donc par « phénotype » d'un individu toute caractéristique biologique, clinique ou démographique de cet individu. Cependant, de tels dispositifs de prédiction sont généralement confrontés à ce que l'on appelle communément le « fléau de la dimension » (« curse of dimensionality »), problème bien connu qui revient à tirer des conclusions à partir d'un nombre réduit d'observations dans un espace de données d'entrée, ou descripteurs, de dimension élevée et qui conduit à de mauvaises performances du dispositif de prédiction.

Lichen Liang et al., « Spatial SVM for feature selection and fMRI activation detection » décrit une application de la méthodologie des machines à vecteurs de support (SVM) au problème de la détection d'activation en IRM fonctionnelle (fMRI).

Julia Neumann et al., « Combined SVM-based feature selection and classification » décrit un procédé d'élaboration d'un classifieur, notamment des machines à vecteurs de support (SVM), qui tient compte de nouvelles approches en termes de sélection de descripteurs pour améliorer la précision de description en évitant le fléau de la dimension.

Yong Fan et al., « Detecting cognitive states from fMRI images by machine learning and multivariate classification » décrit un procédé d'élaboration d'un classifieur, notamment des machines à vecteurs de support (SVM), destiné à prédire des états cognitifs d'un individu à partir d'images fMRI de l'individu.

Andrew Webb, « statistical pattern recognition », Oxford University Press, décrit différentes approches destinées à sélectionner des descripteurs dans le cadre de l'élaboration d'un classifieur.

Mourao-Miranda et al., « Classifying brain states and determining the discriminating activation patterns: Support Vector Machine on functional MRI data » décrit une application de l'algorithme des machines à vecteurs de support (SVM) pour effectuer une classification multivariée d'états cérébraux à partir de données d'IRM fonctionnelle (fMRI).

Luts et al., « A combined MRI and MRSI based multiclass system for brain tumour recognition using LS-SVMs with class probabilities and feature selection » décrit l'utilisation de classifieurs pour le diagnostic de tumeurs cérébrales à partir de données d'IRM et d'ISRM (imagerie par spectroscopie de résonance magnétique).

Y.-W. Chen et C.-J. Lin, « Combining SVMs with various feature selection strategies » décrit une analyse permettant d'évaluer la performance de classifieurs utilisant des combinaisons SVM/sélection de descripteurs.

Mikolajczyk et al., « A performance evaluation of local descriptors » décrit une analyse permettant d'évaluer la performance de descripteurs extraits par différents types de détecteurs en présence de transformations géométriques et photométriques des images acquises.

L'invention a pour but de proposer un procédé permettant d'élaborer un dispositif de prédiction présentant un bon compromis entre complexité et ajustement à des données d'entrée.

A cet effet, l'invention a pour objet un procédé selon la revendication 1.

- acquisition d'images multidimensionnelles d'individus au moyen d'un appareil d'imagerie ; et
- extraction d'éléments d'images multidimensionnelles en tant que descripteurs à partir des images multidimensionnelles acquises ;
- classement des descripteurs déterminés en fonction de leur capacité à prédire ledit phénotype ;
- sélection parmi les descripteurs classés d'un nombre pertinent de descripteurs les mieux classés suffisant à prédire ledit phénotype ; et
- construction du dispositif de prédiction à partir des descripteurs sélectionnés.

Le procédé selon l'invention peut comprendre une ou plusieurs des caractéristiques suivantes :

- les images multidimensionnelles acquises sont des images tridimensionnelles et les éléments d'images sont des voxels ;

- l'étape d'acquisition d'images tridimensionnelles est réalisée par tomographie par émission de positrons et/ou par résonance magnétique nucléaire ;
- l'étape de détermination des descripteurs comprend une étape de pré-traitement des images multidimensionnelles acquises ;
- l'étape de classement des descripteurs conduit à une liste de sous-ensembles emboîtés de descripteurs ;
- l'étape de classement des descripteurs est réalisée par des méthodes univariées telles qu'un test T, un test F ou encore une analyse ROC ;
- l'étape de choix de la fonction prédictive est basée sur une approche générative ou sur une approche discriminante ; et
- l'étape de calcul de la fonction de sélection est basée sur une combinaison d'un terme d'ajustement aux données de la fonction prédictive pénalisé par un terme qui est fonction de la complexité de la fonction prédictive.

Une utilisation d'un dispositif de prédiction élaboré par un procédé tel que défini ci-dessus consiste à prédire la réponse d'un individu à un traitement par stimulation magnétique transcranienne à partir d'images multidimensionnelles du cerveau dudit individu.

L'invention a également pour objet un support de stockage d'information comprenant un code pour élaborer un dispositif de prédiction destiné à prédire un phénotype d'un individu à partir de données d'imagerie dudit individu selon la revendication 10.

L'invention a en outre pour objet un appareil d'élaboration d'un dispositif de prédiction destiné à prédire un phénotype d'un individu à partir de données d'imagerie dudit individu selon la revendication 11.

L'invention sera mieux comprise à la lecture de la description qui va suivre, donnée uniquement à titre d'exemple et faite en se référant aux dessins annexés, sur lesquels :

- la Figure 1 est un schéma de principe d'un dispositif de prédiction élaboré par le procédé selon l'invention ;
- la Figure 2 est une vue schématique représentant l'appareil d'élaboration du dispositif de prédiction de la Figure 1 ;
- la Figure 3 est un organigramme représentant les quatre étapes principales du procédé selon l'invention ;
- la Figure 4 est un organigramme illustrant plus en détail l'étape de détermination des descripteurs ;
- la Figure 5 est un organigramme montrant plus en détail l'étape de sélection d'un nombre pertinent de descripteurs ;
- la Figure 6 est un graphique représentant des taux d'erreur de prédiction en fonction du nombre de descripteurs utilisés par la fonction prédictive du dispositif de prédiction de la Figure 1 ;
- la Figure 7 est un organigramme illustrant la procédure de validation croisée « leave-one-out » de la fonction prédictive du dispositif de prédiction de la Figure 1 ; et
- les Figures 8A et 8B sont des vues respectivement en perspective et en coupe montrant des régions du cerveau d'un individu sélectionnées automatiquement par le procédé selon l'invention.

Le procédé selon l'invention consiste à élaborer un dispositif de prédiction d'un phénotype d'un individu à partir d'images multidimensionnelles de cet individu.

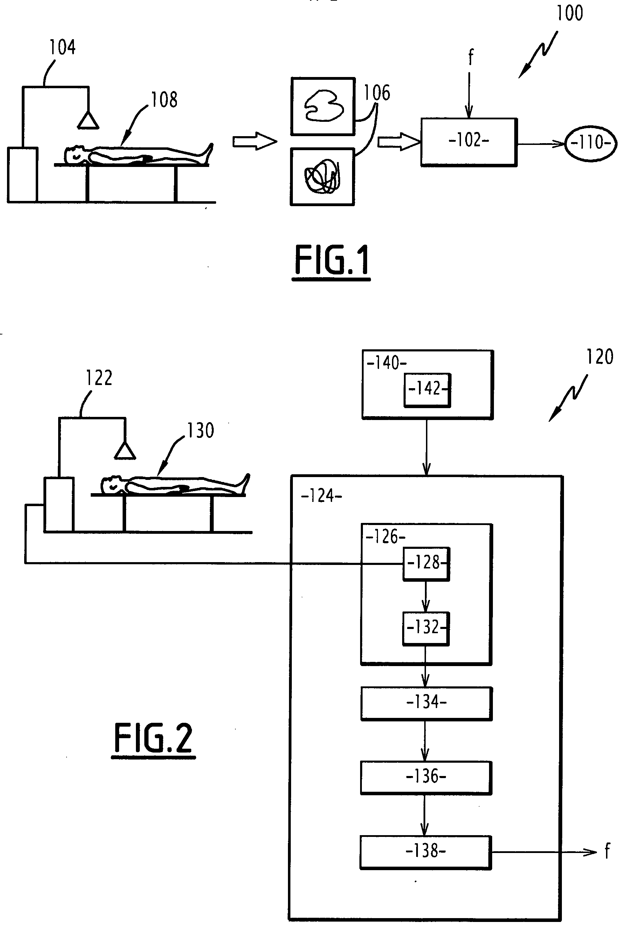

La Figure 1 illustre une installation de prédiction 100 comprenant un dispositif de prédiction 102 et un appareil d'imagerie 104. Le dispositif de prédiction 102 est un dispositif, par exemple un ordinateur, qui met en oeuvre une fonction prédictive $f$ prédéfinie et qui, à partir d'images multidimensionnelles 106 d'un individu 108 acquises au moyen de l'appareil d'imagerie 104, permet de prédire un phénotype 110 de l'individu 108.

Dans le domaine médical, un phénotype à prédire peut être un diagnostic clinique parmi deux classes, par exemple malade/non malade. On peut aussi prédire la réponse d'un patient à un traitement médical comme cela sera expliqué plus en détail ultérieurement.

La Figure 2 représente un appareil 120 permettant d'élaborer le dispositif de prédiction 102, et plus particulièrement la fonction prédictive $f$. L'appareil 120 comprend un appareil d'imagerie 122 et un système de traitement de données 124 relié à l'appareil d'imagerie 122. Le système de traitement de données 124 comprend des moyens 126 pour déterminer des descripteurs d'imagerie, ces moyens de détermination 126 comprenant des moyens 128 reliés à l'appareil d'imagerie 122 pour acquérir des images multidimensionnelles de N individus 130 grâce à l'appareil d'imagerie 122, et des moyens 132 reliés aux moyens d'acquisition 128 pour extraire des éléments d'images multidimensionnelles en tant que descripteurs à partir des images multidimensionnelles acquises. Le système de traitement de données 124 comprend des moyens 134 reliés aux moyens d'extraction 132 pour classer les descripteurs déterminés en fonction de leur capacité à prédire le phénotype 110, des moyens 136 reliés aux moyens de classement 134 pour sélectionner parmi les descripteurs classés un nombre pertinent de descripteurs les mieux classés suffisant à prédire le phénotype 110, et des moyens 138 reliés aux moyens de sélection 136 pour construire la fonction prédictive $f$ et donc le dispositif de prédiction 102.

Dans le mode de réalisation décrit ici, les différents moyens 126, 128, 132, 134, 136 et 138 du système de traitement de données 124 sont mis en oeuvre à l'aide d'un support de stockage d'information 140 comprenant un code 142 comportant des instructions, chaque instruction correspondant respectivement à chacun de ces moyens.

Le procédé selon l'invention traite en particulier du classement de descripteurs selon leur pertinence à prédire le phénotype d'intérêt 110, et du choix du nombre de descripteurs à utiliser pour construire la fonction prédictive *f*. Un descripteur est une information issue directement ou indirectement d'une ou plusieurs images multidimensionnelles 106 de l'individu 108.

Dans un premier temps, la construction de la fonction prédictive *f* consiste à chercher le nombre *p* de descripteurs $\boldsymbol{x}_i^p$ mesurés sur les images issues d'un échantillon *i* qui permettra de prédire son phénotype $y_i$, nommé par la suite variable cible:

$$f : \mathbf{R}^p \to \mathbf{R}$$
$$f(\boldsymbol{x}_i^p, \boldsymbol{\theta}^p) = y_i \qquad\qquad (1)$$

où $\theta^p$ sont les paramètres de la fonction prédictive *f* sur les *p* descripteurs.

Pour traiter ce problème, les descripteurs sont classés selon leur pertinence à prédire le phénotype d'intérêt, puis on sélectionne le nombre *p* de ces descripteurs qui seront utilisés dans la fonction prédictive *f*, cette dernière étant choisie au préalable parmi les différents types proposés dans la littérature.

Dans un second temps, on procède à l'estimation des paramètres $\theta^p$ de *f*.

Finalement, la fonction prédictive *f* peut être appliquée sur les *p* descripteurs $\boldsymbol{x}_i^p$ issus des images acquises sur l'échantillon *i* pour prédire la variable cible $y_i$.

Les différentes étapes du procédé selon l'invention vont maintenant être décrites.

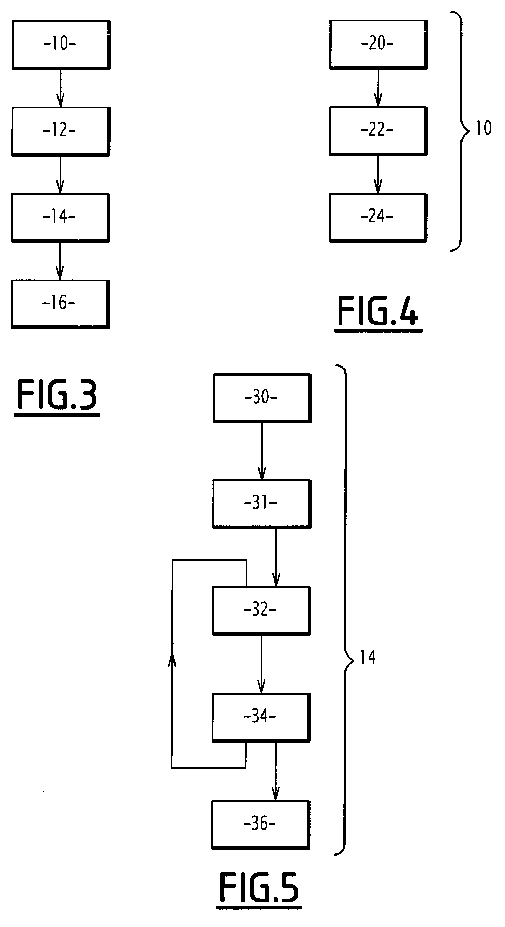

Comme représenté sur la Figure 3, le procédé selon l'invention comprend quatre étapes principales :

- une première étape 10 destinée à déterminer les descripteurs et réalisée par les moyens de détermination 126 (Figure 2) ;
- une deuxième étape 12 destinée à classer les descripteurs déterminés à l'étape 10 et réalisée par les moyens de classement 134 (Figure 2) ;
- une troisième étape 14 destinée à sélectionner un nombre pertinent de descripteurs les mieux classés parmi les descripteurs classés à l'étape 12 et réalisée par les moyens de sélection 136 (Figure 2) ; et
- une quatrième étape 16 destinée à construire la fonction prédictive à partir des descripteurs sélectionnés à l'étape 14 et réalisée par les moyens de construction 138 (Figure 2).

En référence à la Figure 4, la première étape principale 10 de détermination des descripteurs comprend elle-même trois étapes secondaires.

Lors d'une première étape secondaire 20 réalisée par les moyens d'acquisition 128 (Figure 2), plusieurs images multidimensionnelles d'individus 130 sont acquises au moyen d'un appareil d'imagerie 122.

Dans le mode de réalisation décrit ici, les images multidimensionnelles acquises sont des images tridimensionnelles.

En variante, ces images sont des images 4D.

Les images tridimensionnelles acquises sont ensuite pré-traitées (étape 22), notamment recalées dans un repère stéréotaxique commun de manière à assurer une mise en correspondance de celles-ci afin de pouvoir comparer et/ou combiner leurs informations respectives.

Les images tridimensionnelles sont formées d'éléments d'images, notamment de voxels.

Les voxels des images tridimensionnelles pré-traitées sont alors extraits et utilisés directement comme descripteurs (étape 24 réalisée par les moyens d'extraction 132 de la Figure 2).

On dispose ainsi d'une matrice X formée par les données d'imagerie et d'un vecteur $\boldsymbol{y}$ formé par les informations phénotypiques à prédire.

On suppose que la matrice $\boldsymbol{x}$ est composée de P descripteurs pour N sujets que nous appellerons désormais « échantillons ».

La matrice $\boldsymbol{x}$ des données d'imagerie comporte alors N lignes et P colonnes, et le vecteur $\boldsymbol{y}$ (variable cible) du phénotype à prédire comporte N composantes.

La deuxième étape principale 12 du procédé selon l'invention (Figure 3) consiste à classer les descripteurs en fonction de leur capacité à prédire le phénotype $\boldsymbol{y}$.

La troisième étape principale 14 du procédé selon l'invention consiste à sélectionner le nombre p de descripteurs les mieux classés qui seront utilisés par la fonction prédictive *f* finale.

L'objectif est de trouver l'ensemble des descripteurs sur lequel la fonction prédictive f possède un bon compromis entre complexité et ajustement aux données afin de s'affranchir du fléau de la dimension.

En effet, les fonctions prédictives complexes, construites sur un grand nombre de descripteurs, ont tendance à produire un sur-apprentissage des données, menant à de mauvaises performances sur de nouvelles données.

Inversement des fonctions trop simples, utilisant peu de descripteurs, n'auront pas la capacité de capturer des motifs discriminants efficaces.

Comme illustré sur la Figure 5, la troisième étape principale 14 de sélection des descripteurs comprend elle-même cinq étapes secondaires.

Une première étape secondaire 30 consiste à choisir la fonction prédictive f.

Une deuxième étape secondaire 31 consiste à calibrer une fonction de sélection g présentée ci-dessous, cette calibration étant menée sur des données simulées. Cette étape de calibration 31 est réalisée par des moyens appropriés que comporte le système de traitement de données 124, ces moyens étant mis en oeuvre à l'aide d'une instruction correspondante que comporte le code 142.

Ces deux étapes secondaires 30, 31 sont effectuées une fois pour toutes au démarrage de l'algorithme.

Dans une troisième étape secondaire 32, pour $p$ prenant des valeurs entre 1 et $P$, une procédure d'apprentissage $learn_f(\boldsymbol{X}^p, \boldsymbol{y})$ spécifique à la fonction prédictive $f$ est appliquée. On obtient alors les paramètres $\theta^p$ de la fonction prédictive $f$.

Pour ces mêmes valeurs de $p$, on calcule ensuite la fonction de sélection $g(X^p, y. \theta^p) \rightarrow R$, également spécifique à la fonction prédictive $f$, qui détermine le compromis entre complexité du modèle et ajustement aux données (étape 34), la calibration de ce compromis ayant été précédemment réalisée à l'étape 31 sur des données simulées.

On choisit alors, à l'étape 36, le nombre $p$ de descripteurs qui optimise la fonction de sélection $g$ :

$$p = \arg_{p \in [1, P]} \min g(\boldsymbol{X}^p, \boldsymbol{y}, \boldsymbol{\theta}^p) \tag{2}$$

La quatrième étape principale 16 du procédé selon l'invention (Figure 3) consiste à construire la fonction prédictive à partir des $p$ descripteurs sélectionnés.

Le dispositif de prédiction 102 (Figure 1) ainsi élaboré permet, par le biais de la fonction prédictive $f$, de prédire le phénotype d'intérêt 110, ou variable cible, d'un individu 108 à partir d'images tridimensionnelles 106 de cet individu 108, les images 106 formant les données d'entrée de la fonction prédictive et les données de sortie de cette fonction correspondant à la prédiction de la variable cible 110.

Nous allons à présent décrire différents modes de réalisation pour chacune des étapes du procédé selon l'invention.

Revenons à la première étape principale 10 de détermination des descripteurs.

L'acquisition des images tridimensionnelles peut être réalisée au moyen de différentes modalités d'imagerie, par exemple au moyen d'une caméra à tomographie par émission de positrons (TEP) et/ou au moyen d'un scanner par résonance magnétique nucléaire (RMN).

Dans le cas de l'imagerie TEP, différents traceurs peuvent être utilisés, comme le $^{18}$F-FDG qui reflète le métabolisme de la structure tissulaire considérée ou l'eau marquée ($H_2^{15}O$) qui est fonction du débit sanguin. Afin de s'abstraire des variations individuelles globales, le signal moyen global de chaque échantillon mesuré sur la structure tissulaire est ramené à une valeur commune pour tous les échantillons.

Dans le cas de l'imagerie RMN structurelle pondérée en T1 ou T2, une segmentation des tissus en matière grise/matière blanche et liquide céphalo-rachidien (LCR) est effectuée. La probabilité pour chaque voxel d'appartenir à chacun des deux tissus et au LCR est alors obtenue.

Dans le cas de l'imagerie RMN de diffusion, on obtient, en chaque voxel, des mesures sur la diffusion locale de l'eau en ce point. Ces mesures reflètent la structure locale des tissus : les plus courantes sont l'ADC (coefficient de diffusion apparent) et l'anisotropie fractionnelle (FA).

Afin que les images issues des différents échantillons soient comparables entre elles, les images sont recalées dans un repère commun et ce pour chaque modalité d'imagerie. Un recalage affine qui aligne globalement les images entre elles ou un recalage non linéaire qui autorise des déformations locales afin d'améliorer l'alignement des images est utilisé.

En appliquant ce recalage vers un repère commun aux descripteurs, on obtient, pour chaque échantillon $i$, $P$ descripteurs qui, une fois concaténés dans un ordre déterminé, forment le vecteur $\boldsymbol{x}_i$.

Finalement, ces vecteurs $\boldsymbol{x}_i$ sont concaténés pour obtenir la matrice $\boldsymbol{X}$ des données d'imagerie (de dimension $N*P$).

La deuxième étape principale 12 de classement des descripteurs est réalisée à l'aide de méthodes univariées qui classent les descripteurs indépendamment les uns des autres.

Le résultat est une liste de sous-ensembles emboîtés de descripteurs $[F_1, F_2, ..., F_k, ..., F_P]$ où $F_k$ est la combinaison des k descripteurs les mieux classés.

Ces méthodes, aussi appelées filtres, répondent à plusieurs critères : leur simplicité garantit une simplicité calculatoire indispensable quand le nombre de descripteurs est élevé. De plus, cette même simplicité limite le sur-apprentissage sur la base d'échantillons d'entraînement.

L'utilisation de méthodes dérivées du coefficient de corrélation de Pearson qui fait l'hypothèse de linéarité entre chaque descripteur et la variable cible **y** est privilégiée. Si la variable cible **y** est discrète, l'hypothèse de linéarité se traduit par l'utilisation d'un test T ou d'un test F.

Sans hypothèse de linéarité, il est avantageux d'utiliser des tests non paramétriques, comme le test de Wilcoxon. On peut aussi utiliser des tests qui mesurent uniquement la qualité de la séparation entre les groupes, comme la mesure de l'aire sous la courbe (noté AUC pour « Area Under Curve ») d'une analyse ROC (« Receiver Operating Characteristic ») qui est équivalente au calcul du coefficient de Gini.

La troisième étape principale 14 de sélection des descripteurs commence par le choix d'un type de fonction prédictive (étape 30). En pratique, cette fonction est fixée par l'utilisateur au démarrage de l'algorithme.

Trois types de fonction prédictive sont envisagés.

Le premier type de fonction prédictive est basé sur une approche générative et concerne les tâches de régression, c'est-à-dire lorsque la variable cible $y_i$ est quantitative ($y_i \in \mathbf{R}$). La fonction prédictive $f(\boldsymbol{x}_i^p, \boldsymbol{\theta}^p) = y_i$ est la régression linéaire qui se définit ainsi :

$$f(\boldsymbol{x}_i^p, \boldsymbol{\theta}^p) = (\boldsymbol{x}_i^p)'\boldsymbol{\theta}^p \tag{3}$$

Et la fonction d'apprentissage *learn$_f$*(**X$^p$**,**y**) donne :

$$\boldsymbol{\theta}^p = ((\boldsymbol{X}^p)'\boldsymbol{X}^p)^{-1}(\boldsymbol{X}^p)'\boldsymbol{y} \tag{4}$$

Le deuxième type de fonction prédictive est également basé sur une approche générative utilisée dans un objectif de classification proprement dite, c'est-à-dire lorsque la variable cible $y_i$ est discrète ($y_i \in \{1,...,C\}$). Une analyse discriminante linéaire (LDA) est employée par laquelle :

$$f(\boldsymbol{x}_i^p, \boldsymbol{\theta}^p) = \arg\max_{c \in \{1,...,C\}} p_c \mathcal{N}(\boldsymbol{x}_i^p | \boldsymbol{\mu}_c^p, \Sigma^p) \tag{5}$$

La fonction d'apprentissage *learn$_f$*(**X$^p$**,**y**) va consister à estimer les paramètres $\boldsymbol{\theta}^p = (\boldsymbol{\mu}_c^p, \Sigma^p)$ et $p_c$ de la loi normale multivariée $\mathcal{N}$, où $\mu_c^p$ est le vecteur moyen des échantillons de la classe c, $\Sigma^p$ est la matrice de variance/covariance intra-classe, et $p_c$ est la probabilité à priori de la classe *c*.

Le troisième type de fonction prédictive est basé sur une approche discriminante et concerne les tâches de classification parmi deux classes possibles ($y_i \in \{1,-1\}$). Des séparateurs à vaste marge, également appelés machines à vecteurs de support (SVM pour « Support Vector Machine ») sont employés, définissant :

$$f(\boldsymbol{x}_i^p, \boldsymbol{\theta}^p) = \mathrm{sgn}\left(\sum_{n \in \{1,...,N\}} \alpha_n y_n K(\boldsymbol{x}_n^p, \boldsymbol{x}_i^p)\right) \tag{6}$$

où $K(\boldsymbol{x}_n^p, \boldsymbol{x}_i^p)$ est la fonction noyau évaluée sur *p* descripteurs du point $\boldsymbol{x}_n$.

Un noyau linéaire où $K(\boldsymbol{x}_n^p, \boldsymbol{x}_i^p)$ est le produit scalaire entre $\boldsymbol{x}_n^p$ et $\boldsymbol{x}_i^p$ est employé. Rappelons que *n* est pris parmi les *N* échantillons d'apprentissage et *i* est l'indice de l'échantillon de test dont on souhaite prédire le phénotype $y_i$.

La fonction d'apprentissage *learn$_f$*(**X$^p$**,**y**) consiste à estimer les paramètres $\theta^p = \{\alpha_n \in \mathrm{R}\}$, c'est-à-dire la contribution de chaque échantillon d'apprentissage n. L'objectif est de maximiser la marge $\mathcal{N}$, où m représente également un échantillon d'apprentissage, sous contrainte d'une bonne classification des échantillons d'apprentissage. Ce problème d'optimisation d'une fonction quadratique sous contrainte peut être résolu en utilisant les multiplicateurs de Lagrange.

Si la pondération apportée à l'échantillon n est non nulle ($\alpha_n \neq 0$), on dira de cet échantillon qu'il est un point support de la fonction de classification.

Concernant la fonction de sélection $g(X^p, y, \theta^p)$, qui permet de déterminer le nombre $p$ de descripteurs à utiliser pour construire la fonction prédictive, et comme évoqué précédemment, nous avons reformulé ce problème comme un problème de sélection de modèle où l'on cherche à déterminer le nombre $p$ de descripteurs permettant de construire un modèle prédictif ayant de bonnes performances de prédiction sur de nouvelles données ou sur des scans jamais vus auparavant.

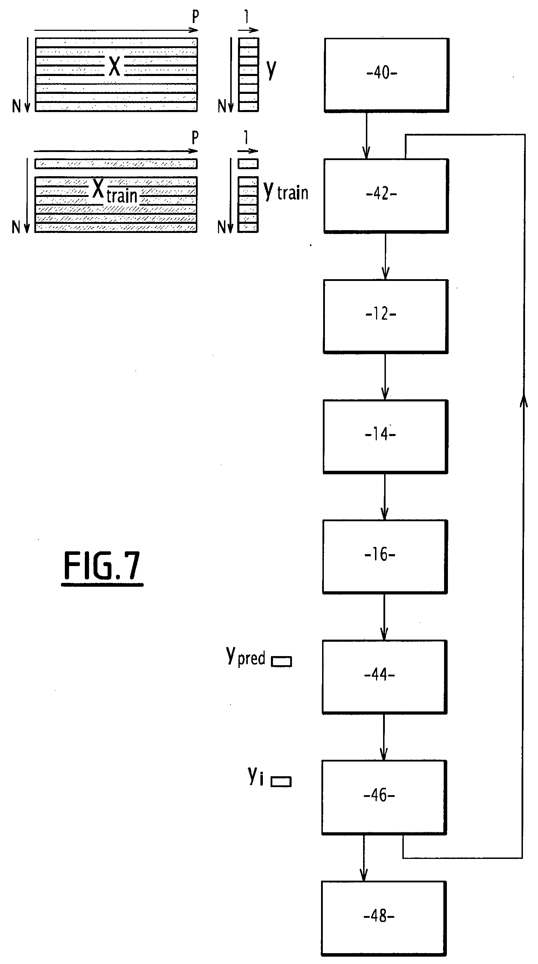

Une première approche consiste à évaluer la capacité de prédiction par validation croisée sur les données d'apprentissage. Cette approche fonctionne quel que soit le type de fonction prédictive choisi et nécessite deux boucles imbriquées de validation croisée. Une première boucle interne valide les paramètres du modèle sur un sous-ensemble d'échantillons parmi les échantillons d'apprentissage appelés échantillons de validation. La deuxième boucle externe, comme présentée dans la Figure 7, valide le modèle précédemment estimé sur des échantillons de test indépendants.

Dans la suite, des approches spécifiques au type de fonction prédictive choisi sont proposées. L'estimation de la capacité de prédiction peut être reformulée comme un bon compromis complexité du modèle/ajustement aux données. Nous dérivons cette idée pour les deux grandes familles de fonctions prédictives : les fonctions génératives et les fonctions discriminantes.

Dans le cas des fonctions prédictives basées sur une approche générative, l'emploi des méthodes basées sur la vraisemblance pénalisée par un terme qui est fonction de la complexité du modèle est proposé. Il faut donc tout d'abord définir la mesure de vraisemblance en fonction des différents types de fonction prédictive. Dans le cas d'une tâche de régression linéaire comme fonction prédictive, on a :

$$\mathcal{L}(X^p, y, \theta^p) = \prod_{n \in [1,\ldots,N]} \mathcal{N}(x_n^p | (x_i^p)' \theta^p, (\sigma^p)^2) \tag{7}$$

avec comme variance résiduelle :

$$(\sigma^p)^2 = \frac{1}{N-p} \sum_{n \in [1,\ldots,N]} (y_n - (x_n^p)' \theta^p)^2 \tag{8}$$

Dans le cas d'une tâche de classification avec LDA comme fonction prédictive, on a :

$$\mathcal{L}(X^p, y, \theta^p) = \prod_{n \in [1,\ldots,N]} (p_c \mathcal{N}(x_i^p | \mu_c^p, \Sigma^p))^{\delta(y_n, c)} \tag{9}$$

avec $\delta(y_n, c) = 1$ si $y_n$ est de la classe c, et 0 sinon.

Ainsi, la mise en oeuvre de la fonction de sélection de modèle $g$ est obtenue par pénalisation des précédentes log-vraisemblances avec un critère basé sur le BIC (« Bayesian Information Criterion ») :

$$g(X^p, y, \theta^p) = \underbrace{-2 \log \mathcal{L}(X^p, y, \theta^p)}_{\text{(ajustement)}} + \underbrace{k_2 \, p \log(N)}_{\text{(capacité)}} \tag{10}$$

où p est le nombre de descripteurs sélectionnés et $N$ le nombre d'échantillons. La log-vraisemblance, qui représente l'ajustement aux données, est pénalisée par un deuxième terme qui mesure la capacité, ou complexité, du modèle. La pondération $k_2$ apportée à la pénalisation est déterminée par calibration sur des données aléatoirement permutées. Si $k_2$ est fixé à un, alors ce critère est équivalent au BIC.

Dans le cas des fonctions prédictives basées sur une approche discriminante avec SVM comme fonction prédictive, nous proposons de pénaliser le taux d'erreur de classification (terme d'ajustement aux données) par un terme qui est fonction de la complexité du modèle (voir équation 11). Pour ce deuxième terme de pénalisation, il faut utiliser une mesure dont le calcul n'est pas directement fonction de la dimension ; ainsi, on peut comparer des modèles basés sur des espaces à dimensions différentes. Cette mesure consiste à compter le nombre de points supports, c'est-à-dire

#{$\alpha_n \neq 0$}. Outre sa grande simplicité, cette mesure reflète aussi une borne supérieure de l'espérance de l'erreur de prédiction. En conséquence nous proposons d'utiliser ce terme pour pénaliser un terme d'ajustement aux données mesurées par les erreurs de classification :

$$g(X^p, y, \theta^p) = \underbrace{\sum_{i \in \{1 \ldots N\}} |y_i - \text{sgn}(\sum_{n \in \{1 \ldots N\}} \alpha_n y_k K(x_n^2, x_i^2))|}_{(\text{ajustement})} + \underbrace{k_2 \#\{\alpha_n \neq 0\}}_{(\text{capacité})} \qquad (11)$$

Ainsi, dans tous les cas, la fonction de sélection de descripteurs $g(X^p, y, \theta^p)$ s'écrit comme la somme de deux termes : un terme d'ajustement aux données et un terme de capacité de la fonction prédictive dont la pondération ($k_2$) est déterminée par calibration sur des données aléatoirement permutées.

Pour la plupart des types de fonction prédictive, il existe des éléments théoriques qui fournissent la contribution respective de ces deux termes sous de nombreuses hypothèses qui sont rarement respectées dans les cas réels d'application.

En effet, les cas réels d'application sont définis par :

(i) le jeu de données considéré ;
(ii) le type de fonction prédictive choisi ; et
(iii) la méthode de classement des descripteurs.

Ces éléments éloignent généralement les cas réels des conditions théoriques d'application. Ainsi une mauvaise pondération des contributions respectives du terme d'ajustement et du terme de capacité favorisera des modèles exagérément simples ou complexes.

Pour résoudre ce problème, une méthode de calibration automatique des contributions respectives par permutation aléatoire des données est utilisée.

La permutation aléatoire des valeurs de $y$ rend aléatoire l'association entre un échantillon $x_i$ et le phénotype $y_i$ à prédire.

Sous cette hypothèse nulle simulée, on calcule :

(i) le score d'ajustement sur les données d'apprentissage ;
(ii) le score de capacité de la fonction prédictive ; et
(iii) le score de généralisation aux données de tests indépendants.

Sous l'hypothèse nulle, le score de généralisation est connu théoriquement et correspond à un choix aléatoire.

En ré-échantillonnant par permutation aléatoire les $y_i$ un grand nombre de fois et en calculant ces trois scores pour un nombre variable p de descripteurs, la pondération respective de (i) et (ii) afin d'obtenir une approximation ou une borne satisfaisante de (iii) est déterminée.

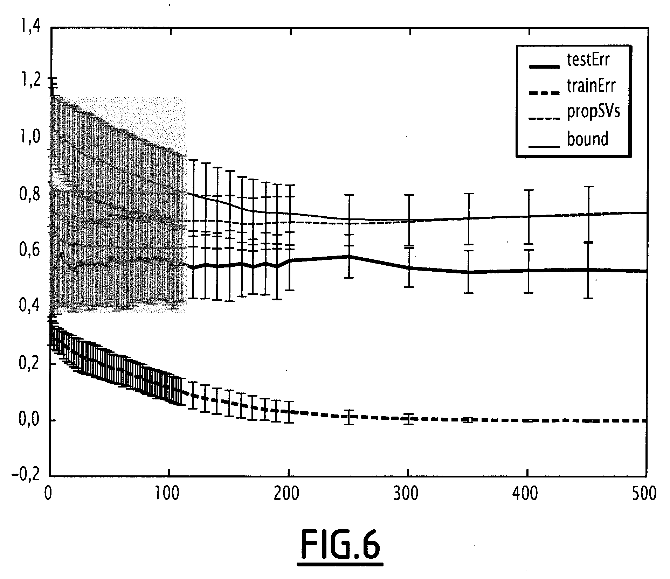

Cette détermination peut être empirique et visuelle et dans ce cas, on vérifie que la combinaison linéaire choisie du score d'ajustement et du score de capacité fournit une borne supérieure satisfaisante au score de généralisation. La Figure 6 montre un cas concret d'application de cette méthode avec une fonction prédictive basée sur un SVM linéaire et représente les taux d'erreurs de classification sur les données d'entraînement « trainErr » (score d'ajustement) et sur les données de test « testErr » (score que l'on souhaite approcher) en fonction du nombre de descripteurs utilisés. Ces scores sont calculés sur des données permutées aléatoirement. La Figure 6 montre également le nombre de points supports normalisé par le nombre d'échantillons #{$\alpha_n \neq 0$}/$N$ appelé « propSVs » (proportion de vecteurs supports) et la somme de « propSVs » avec « trainErr » appelée « bound » et qui correspond à $g(X^p, y, \theta^p)$ calculé selon l'équation 11 (au facteur N près). Une simple validation visuelle permet de confirmer des résultats théoriques : la proportion de vecteurs supports « propSVs » fournit une borne à l'erreur de classification obtenue sur des échantillons de test. Cependant dans les faibles dimensions (nombre de descripteurs < 200), cette borne est incluse dans l'écart-type de « testErr ». L'utilisation de la quantité définie dans l'équation 11 (appelée « bound » dans la Figure 6) résout ce problème en fournissant une borne satisfaisante dans les petites dimensions.

Finalement, les pondérations respectives du score d'ajustement (i) et du score de capacité (ii) peuvent être calculées automatiquement à l'aide d'un modèle linéaire estimé sur l'ensemble des valeurs obtenues par permutation :

$$\text{généralisation} = k_0 + k_1 \text{ ajustement} + k_2 \text{ capacité} \qquad (12)$$

Contrairement à l'approche précédente où l'on cherchait à borner la généralisation, on fait ici l'hypothèse que la combinaison de l'ajustement et de la capacité peuvent fournir une bonne estimation de la généralisation. Nous remarquerons au passage que cette dernière est constante sous l'hypothèse nulle et donc que cela revient à trouver une manière de pénaliser l'ajustement par la capacité de telle sorte que la combinaison des deux reste constante.

Un cas concret d'application du procédé selon l'invention consiste à réaliser le pronostic de la réponse à un traitement par stimulation magnétique transcranienne (TMS pour « Transcranial Magnetic Stimulation ») de sujets déprimés pharmaco-résistants à partir d'images TEP et RMN acquises avant le traitement. La fonction prédictive va ici être un classifieur devant prédire la réponse (oui/non) au traitement TMS à partir des images acquises avant le traitement.

Des études ont montré que les troubles de l'humeur augmentent avec le temps et pourraient devenir, aux alentours de 2020, la deuxième cause principale de morbidité dans le monde.

20 à 30% des patients déprimés finissent par développer une dépression résistante ou réfractaire aux traitements.

La stimulation magnétique transcranienne, initialement utilisée dans des études fonctionnelles du système nerveux, est apparue lors de la dernière décennie comme un nouveau traitement potentiel de la dépression, et plusieurs études en ont montré des effets thérapeutiques positifs, même sur des patients déprimés résistants aux traitements, avec une baisse moyenne des symptômes dépressifs d'environ 34%.

La stimulation magnétique transcranienne est une technique médicale non invasive qui permet de stimuler le cortex cérébral. Elle produit, grâce à une bobine de stimulation placée sur la surface de la tête, une dépolarisation neuronale avec des effets qui se propagent dans les régions cérébrales connexes.

Cependant, la réponse au traitement TMS varie grandement selon les patients traités.

Des études ont tenté de corréler cette variation de la réponse aux caractéristiques individuelles des patients, comme l'âge ou le sexe, mais sans succès.

En réalité, la dépression est associée à la morphométrie du cerveau et à des changements fonctionnels dans différentes régions corticales et sous-corticales.

Il existe donc une relation entre les caractéristiques individuelles d'imagerie cérébrale et la réponse au traitement TMS.

Nous présentons par la suite les étapes principales du procédé selon l'invention pour prédire la réponse d'un patient au traitement TMS à partir de scans TEP et RMN acquis avant le traitement.

Pour l'extraction des descripteurs, nous avons utilisé deux modalités d'imagerie : l'imagerie TEP et l'imagerie RMN.

Des images RMN de cerveaux individuels ont été segmentées en matière grise (GM pour « Grey Matter »)/matière blanche/liquide céphalo-rachidien, normalisées dans un repère stéréotaxique commun, et modulées afin de s'assurer que la quantité globale de chaque groupe de tissu reste constante après la normalisation. Ces images ont ensuite été lissées avec un filtre gaussien isotrope dont la largeur à mi-hauteur (FWHM pour « Full Width at Half Maximum ») est de 10 mm.

Les images TEP de cerveaux individuels ont été normalisées dans le même repère stéréotaxique commun et lissées avec un filtre gaussien dont la FWHM est de 8 mm.

Les différences d'intensité globale des images TEP ont été corrigées en utilisant une mise à l'échelle proportionnelle.

**[0105]** - - Nous avons sélectionné, à partir de la littérature, huit régions faisant partie des structures sous-corticales du système limbique et de régions frontales. Ces régions ont été définies grossièrement en appliquant une dilatation morphologique 2D dans un plan axial utilisant un noyau 3x3 unaire sur des régions d'un atlas AAL (pour « Automated Anatomical Labelling »).

Pour chaque région, les voxels des régions TEP et GM ont été concaténés en un vecteur de dimension P, conduisant ainsi à des régions d'environ 5000 voxels.

Soit $\{(x_1,y_1),..., (x_n,y_n)\}$ les données d'entraînement, où $y_j$ vaut 1 ou -1 selon la classe (répondeur ou non-répondeur) à laquelle appartient le point $x_j$.

Chaque $x_j$ est un vecteur réel de dimension $P$ obtenu à partir de la concaténation des voxels TEP et RMN dans la région considérée du sujet $i$.

Concernant le type de fonction prédictive, nous avons choisi une SVM linéaire comme décrit précédemment.

Nous avons ensuite classé les descripteurs selon leur importance évaluée par un test T à deux échantillons (répondeur/non-répondeur) qui est équivalent au test de corrélation évoqué précédemment.

Puis nous avons construit des ensembles des $p$ descripteurs les mieux classés, avec p appartenant à {1, 10, 100, 1000, 1000, $P$}.

La sélection du nombre des $p$ descripteurs dans {1, 10, 100, 1000, 1000, $P$} à utiliser a été réalisée en employant la fonction de sélection $g(X^p,y,\theta^p)$ calculée avec l'équation 11 et calibrée avec la méthode de calibration automatique présentée précédemment.

Les vecteurs de dimension $p$ sont alors utilisés pour construire le classifieur.

Les résultats obtenus sont les suivants.

La précision du classifieur a été évaluée par une procédure de validation croisée « leave-one-out » (LOO-CV pour « Leave-One-Out Cross Validation ») qui fournit une estimation non biaisée de la précision réelle attendue.

Comme le montre la Figure 7, à partir des données d'entrée (étape initiale 40), cette procédure LOO-CV met de côté l'image $x_i$ et la classe $y_i$ du sujet $i$ à tester (étape 42).

Les étapes 12 de classement des descripteurs, 14 de sélection des descripteurs et 16 de construction de la fonction prédictive du procédé selon l'invention sont ensuite réalisées et prennent uniquement en compte les sujets d'entraînement.

La fonction prédictive est alors appliquée à l'image test $x_i$ pour prédire la classe (répondeur ou non-répondeur) du sujet test $i$ (étape 44). Cette prédiction $y_{pred}$ est ensuite comparée avec la vraie classe $y_i$ du sujet test $i$ (étape 46).

Les étapes 42, 12, 14, 16, 44 et 46 sont réitérées pour tous les sujets, c'est-à-dire pour tout $i \in \{1, N\}$.

Toutes les prédictions sont alors moyennées pour évaluer la performance du classifieur (étape 48).

Les sujets répondeurs et non-répondeurs ont été correctement classifiés dans 85% des cas (pour 29 sujets sur un total de 34 sujets), qui est un taux significatif avec une p-value < 2e-05.

La sensibilité du classifieur, qui correspond au taux de classification correcte de répondeurs, est également significative avec un taux de 94% (pour 17 sujets sur 18 sujets répondeurs) et une p-value de 7.248e-05.

La spécificité du classifieur, qui correspond au taux de classification correcte de non-répondeurs, est également significative avec un taux de 75% (pour 12 sujets sur 16 sujets non-répondeurs) et une p-value de 0,03841.

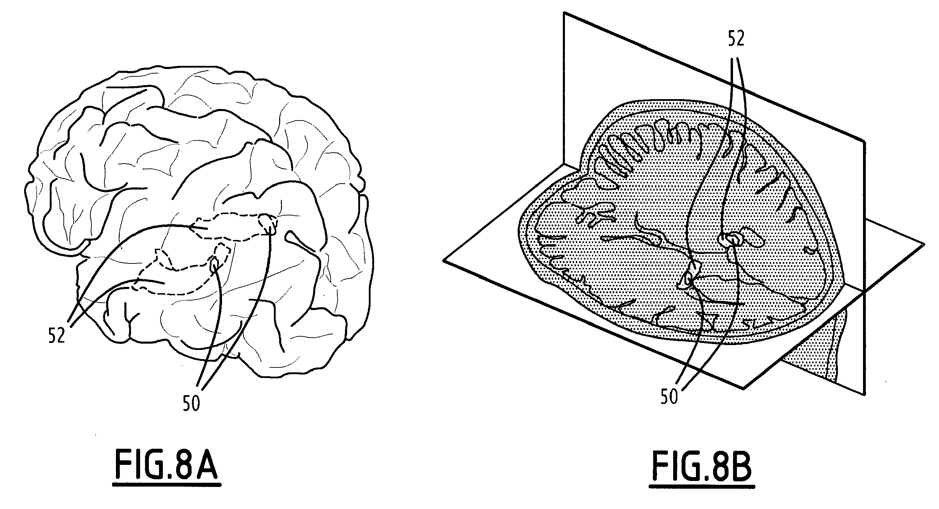

La prédiction précise de la réponse des sujets au traitement TMS pourrait être obtenue en appliquant le procédé sur des régions bilatérales définies grossièrement autour de l'hippocampe. En effet, le procédé appliqué a conduit à une sélection automatique des 100 voxels les mieux classés et groupés en deux régions (référence 50 sur les Figures 8A et 8B) : la première région est constituée de voxels obtenus par RMN et localisés dans la partie postérieure de l'hippocampe droit (référence 52 sur les Figures 8A et 8B) et la deuxième région est constituée de voxels obtenus pas TEP et localisés dans la partie postérieure de l'hippocampe gauche (référence 52 sur les Figures 8A et 8B).

L'invention propose donc un procédé permettant d'élaborer un dispositif de prédiction basé sur une fonction de prédiction multivariée et permettant de prédire le phénotype d'un individu, comme son appartenance à une classe, à partir d'images multidimensionnelles de cet individu.

Dans le cas de la réponse au traitement TMS, le procédé selon l'invention permettra de sélectionner les patients qui pourraient potentiellement répondre au traitement TMS et d'éviter de perdre du temps à traiter des patients potentiellement non-répondeurs au traitement TMS.

La prédiction concerne une information phénotypique qui peut être de différente nature, par exemple de nature clinique (réponse à un traitement, diagnostic de maladie, etc.) ou encore de nature démographique (âge, sexe, etc.).

## Revendications

1. Procédé d'élaboration d'un dispositif de prédiction (102) destiné à prédire une caractéristique biologique, clinique ou démographique (110) d'un individu (108) à partir de données d'imagerie (106) dudit individu (108), **caractérisé en ce qu'**il comprend les étapes suivantes :

    - détermination de descripteurs d'imagerie (étape 10), cette étape comprenant les étapes suivantes :

        - acquisition d'images multidimensionnelles d'individus (130) au moyen d'un appareil d'imagerie (122) (étape 20) ;
        - extraction d'éléments d'images multidimensionnelles à partir des images multidimensionnelles acquises, lesdits éléments extraits étant des descripteurs (étape 24) ;
        - concaténation desdits descripteurs dans un ordre déterminé ;

    - classement des descripteurs déterminés en fonction de leur capacité à prédire ladite caractéristique (110) (étape 12) ;
    - sélection parmi les descripteurs classés d'un nombre pertinent de descripteurs les mieux classés suffisant à prédire ladite caractéristique (110) (étape 14), cette étape comprenant une étape de calibration d'une fonction de sélection du nombre de descripteurs sur des données permutées aléatoirement (étape 31) ; et
    - construction du dispositif de prédiction (102) à partir des descripteurs sélectionnés (étape 16),
    - l'étape de sélection du nombre pertinent de descripteurs les mieux classés (étape 14) comprenant les étapes suivantes :

        - choix d'une fonction prédictive (f) (étape 30) ;

- application, pour différents nombres quelconques de descripteurs les mieux classés, d'une procédure d'apprentissage spécifique à la fonction prédictive (*f*) choisie de manière à déterminer des paramètres de la fonction prédictive (*f*) (étape 32) afin d'optimiser la prédiction de ladite caractéristique (110) ;
- calcul, pour lesdits différents nombres quelconques de descripteurs les mieux classés, d'une fonction de sélection (*g*) du nombre de descripteurs à partir des paramètres de la fonction prédictive (*f*) déterminés (étape 34) ; et
- choix du nombre de descripteurs les mieux classés qui optimise la fonction de sélection (*g*) (étape 36).

2. Procédé selon la revendication 1, **caractérisé en ce que** l'étape de calcul de la fonction de sélection (*g*) (étape 34) est basée sur une combinaison d'un terme d'ajustement aux données de la fonction prédictive (*f*) pénalisé par un terme qui est fonction de la complexité de la fonction prédictive (*f*).

3. Procédé selon la revendication 1 ou 2, **caractérisé en ce que** l'étape de choix de la fonction prédictive (*f*) (étape 30) est basée sur une approche générative ou sur une approche discriminante.

4. Procédé selon l'une quelconque des revendications 1 à 3, **caractérisé en ce que** les images multidimensionnelles acquises sont des images tridimensionnelles et **en ce que** les éléments d'images sont des voxels.

5. Procédé selon la revendication 4, **caractérisé en ce que** l'étape d'acquisition d'images tridimensionnelles (étape 20) est réalisée par tomographie par émission de positrons et/ou par résonance magnétique nucléaire.

6. Procédé selon l'une quelconque des revendications 1 à 5, **caractérisé en ce que** l'étape de détermination des descripteurs (étape 10) comprend une étape de pré-traitement des images multidimensionnelles acquises (étape 22).

7. Procédé selon l'une quelconque des revendications 1 à 6, **caractérisé en ce que** l'étape de classement des descripteurs (étape 12) conduit à une liste de sous-ensembles emboîtés de descripteurs.

8. Procédé selon la revendication 7, **caractérisé en ce que** l'étape de classement des descripteurs (étape 12) est réalisée par des méthodes univariées telles qu'un test T, un test F ou encore une analyse ROC.

9. Utilisation d'un dispositif de prédiction (102) élaboré par un procédé selon l'une quelconque des revendications 1 à 8 pour prédire la réponse d'un individu (108) à un traitement par stimulation magnétique transcranienne à partir d'images multidimensionnelles (106) du cerveau dudit individu (108).

10. Support de stockage d'information (140) comprenant un code (142) pour élaborer un dispositif de prédiction (102) destiné à prédire une caractéristique biologique, clinique ou démographique (110) d'un individu (108) à partir de données d'imagerie (106) dudit individu (108), **caractérisé en ce que** le code (142) comprend des instructions pour :

- déterminer des descripteurs d'imagerie, cette instruction comprenant des instructions pour :

- acquérir des images multidimensionnelles d'individus (130) au moyen d'un appareil d'imagerie (122) ; et
- extraire des éléments d'images multidimensionnelles à partir des images multidimensionnelles acquises, lesdits éléments extraits étant des descripteurs ;
- concaténer lesdits descripteurs dans un ordre déterminé ;

- classer les descripteurs déterminés en fonction de leur capacité à prédire ladite caractéristique (110) ;
- sélectionner parmi les descripteurs classés un nombre pertinent de descripteurs les mieux classés suffisant à prédire ladite caractéristique (110), cette instruction comprenant une instruction pour calibrer une fonction de sélection du nombre de descripteurs sur des données permutées aléatoirement ; et
- construire le dispositif de prédiction (102) à partir des descripteurs sélectionnés,

l'instruction pour sélectionner comprenant également les instructions suivantes pour :

- choisir une fonction prédictive (*f*) ;
- appliquer, pour différents nombres quelconques de descripteurs les mieux classés, d'une procédure d'apprentissage spécifique à la fonction prédictive (*f*) choisie de manière à déterminer des paramètres de la fonction prédictive (*f*) afin d'optimiser la prédiction de ladite caractéristique (110) ;
- calculer, pour lesdits différents nombres quelconques de descripteurs les mieux classés, une fonction de sélection (*g*) du nombre de descripteurs à partir des paramètres de la fonction prédictive (*f*) déterminés ; et
- choisir le nombre de descripteurs les mieux classés qui optimise la fonction de sélection (*g*).

11. Appareil (120) d'élaboration d'un dispositif de prédiction (102) destiné à prédire une caractéristique biologique, clinique ou démographique (110) d'un individu (108) à partir de données d'imagerie (106) dudit individu (108), **caractérisé en ce qu'**il comprend :

- un appareil d'imagerie (122) ; et
- un système de traitement de données (124) comprenant :

- des moyens (126) pour déterminer des descripteurs d'imagerie, ces moyens (126) comprenant:

- des moyens (128) pour acquérir des images multidimensionnelles d'individus (130) au moyen dudit appareil d'imagerie (122) ; et
- des moyens (132) pour extraire des éléments d'images multidimensionnelles à partir des images multidimensionnelles acquises, lesdits éléments extraits étant des descripteurs ;
- des moyens pour concaténer lesdits descripteurs dans un ordre déterminé ;

- des moyens (134) pour classer les descripteurs déterminés en fonction de leur capacité à prédire ladite caractéristique (110) ;
- des moyens (136) pour sélectionner parmi les descripteurs classés un nombre pertinent de descripteurs les mieux classés suffisant à prédire ladite caractéristique (110), ces moyens comprenant des moyens pour calibrer une fonction de sélection du nombre de descripteurs sur des données permutées aléatoirement ; et
- des moyens (138) pour construire le dispositif de prédiction (102) à partir des descripteurs sélectionnés,

les moyens (138) pour sélectionner comprenant des moyens pour :

- choisir une fonction prédictive (*f*) ;
- appliquer, pour différents nombres quelconques de descripteurs les mieux classés, d'une procédure d'apprentissage spécifique à la fonction prédictive (*f*) choisie de manière à déterminer des paramètres de la fonction prédictive (*f*) afin d'optimiser la prédiction de ladite caractéristique (110) ;
- calculer, pour lesdits différents nombres quelconques de descripteurs les mieux classés, une fonction de sélection (*g*) du nombre de descripteurs à partir des paramètres de la fonction prédictive (*f*) déterminés ; et
- choisir le nombre de descripteurs les mieux classés qui optimise la fonction de sélection (*g*).

**Patentansprüche**

1. Verfahren zur Erstellung einer Vorhersagevorrichtung (102) zum Vorhersagen einer biologischen, klinischen oder demografischen Eigenschaft (110) eines Individuums (108) aus bildgebenden Daten (106) des Individuums (108), **dadurch gekennzeichnet, dass** es die folgenden Schritte aufweist:

- Ermitteln von bildgebenden Deskriptoren (Schritt 10), wobei dieser Schritt die folgenden Schritte aufweist:

- Aufnehmen mehrdimensionaler Bilder von Individuen (130) mittels eines bildgebenden Geräts (122) (Schritt 20);
- Extrahieren von Elementen von mehrdimensionalen Bildern aus den aufgenommen mehrdimensionalen Bildern, wobei diese extrahierten Elemente Deskriptoren sind (Schritt 24);
- Verketten der Deskriptoren in einer ermittelten Reihenfolge;

- Klassifizieren der ermittelten Deskriptoren in Bezug auf ihre Fähigkeit zur Vorhersage der Eigenschaft (110) (Schritt 12);
- Auswählen einer relevanten Anzahl von den bestklassifizierten Deskriptoren aus den klassifizierten Deskriptoren, welche für die Vorhersage der Eigenschaft (110) ausreichend ist (Schritt 14), wobei dieser Schritt einen Schritt des Kalibrierens einer Funktion der Auswahl der Anzahl an Deskriptoren auf zufällig vertauschten Daten (Schritt 31) aufweist; und
- Erstellen einer Vorhersagevorrichtung (102) aus den ausgewählten Deskriptoren (Schritt 16), wobei der Schritt des Auswählens der relevanten Anzahl von den bestklassifizierten Deskriptoren (Schritt 14) die folgenden Schritte aufweist:

- Auswählen einer Vorhersagefunktion ($f$) (Schritt 30);
- Anwenden eines Lernprozesses für unterschiedliche beliebige Anzahlen von bestklassifizierten Deskriptoren, welche spezifisch für die Vorhersagefunktion ($f$) ist, welche ausgewählt ist, um die Parameter der Vorhersagefunktion ($f$) (Schritt 32) zu ermitteln, um die Vorhersage der Eigenschaft (110) zu optimieren;
- Berechnen einer Funktion der Auswahl (g) der Anzahl der Deskriptoren aus den ermittelten Parametern der Vorhersagefunktion ($f$) für die unterschiedlichen beliebigen Anzahlen von bestklassifizierten Deskriptoren (Schritt 34); und
- Auswählen der Anzahl der bestklassifizierten Deskriptoren, welche die Funktion der Auswahl (g) optimieren (Schritt 36).

2. Verfahren nach Anspruch 1, **dadurch gekennzeichnet, dass** der Schritt des Berechnens der Funktion der Auswahl (g) (Schritt 34) auf einer Kombination eines Terms zum Anpassen zu den Daten der Vorhersagefunktion ($f$) basiert, welcher durch einen Term bestraft wird, welcher abhängig von der Komplexität der Vorhersagefunktion ($f$) ist.

3. Verfahren nach Anspruch 1 oder 2, **dadurch gekennzeichnet, dass** der Schritt der Auswahl der Vorhersagefunktion ($f$) (Schritt 30) auf einem generativen Ansatz oder auf einem diskriminierenden Ansatz basiert.

4. Verfahren nach einem der Ansprüche 1 bis 3, **dadurch gekennzeichnet, dass** die mehrdimensionalen aufgenommenen Bilder dreidimensionale Bilder sind, und dass die Elemente von Bildern Voxel sind.

5. Verfahren nach Anspruch 4, **dadurch gekennzeichnet, dass** der Schritt des Aufnehmens von dreidimensionalen Bildern (Schritt 20) mittels Positronen-Emissionstomographie und / oder kernmagnetischer Resonanz durchgeführt wird.

6. Verfahren nach einem der Ansprüche 1 bis 5, **dadurch gekennzeichnet, dass** der Schritt des Ermittelns der Deskriptoren (Schritt 10) einen Schritt des Vorverarbeitens der aufgenommenen mehrdimensionalen Bilder aufweist (Schritt 22).

7. Verfahren nach einem der Ansprüche 1 bis 6, **dadurch gekennzeichnet, dass** der Schritt des Klassifizierens der Deskriptoren (Schritt 12) zu einer Liste von verschachtelten Untergruppen der Deskriptoren führt.

8. Verfahren nach Anspruch 7, **dadurch gekennzeichnet, dass** der Schritt des Klassifizierens der Deskriptoren (Schritt 12) mittels univariaten Verfahren, wie beispielsweise eines T-Tests, eines F-Tests oder einer ROC-Analyse durchgeführt wird.

9. Verwendung einer Vorhersagevorrichtung (102), welche durch ein Verfahren nach einem der Ansprüche 1 bis 8 erstellt ist, zum Vorhersagen der Antwort eines Individuums (108) auf eine transkranielle Magnetstimulationsbehandlung aus mehrdimensionalen Bildern (106) des Gehirns des Individuums (108).

10. Informationsspeichermedium (140) aufweisend einen Code (142) zur Erstellung einer Vorhersagevorrichtung (102) zum Vorhersagen einer biologischen, klinischen oder demografischen Eigenschaft (110) eines Individuum (108) aus bildgebenden Daten (106) des Individuums (108), **dadurch gekennzeichnet, dass** dieser Code (142) die folgenden Anweisungen aufweist:

- Ermitteln von bildgebenden Deskriptoren, wobei diese Anweisung Anweisungen aufweist zum:

- Aufnehmen von mehrdimensionalen Bildern von Individuen (130) mittels eines bildgebenden Geräts (122);
- Extrahieren von Elementen von mehrdimensionalen Bildern aus den aufgenommen mehrdimensionalen Bildern, wobei diese extrahierten Elemente Deskriptoren sind;
- Verketten der Deskriptoren in einer ermittelten Reihenfolge;

- Klassifizieren der ermittelten Deskriptoren in Bezug auf ihre Fähigkeit zur Vorhersage der Eigenschaft (110);
- Auswählen einer relevanten Anzahl von den bestklassifizierten Deskriptoren aus den klassifizierten Deskriptoren, welche für die Vorhersage der Eigenschaft (110) ausreichend ist, wobei diese Anweisung eine Anweisung des Kalibrierens einer Funktion der Auswahl der Anzahl an Deskriptoren auf zufällig vertauschten Daten aufweist; und

- Erstellen einer Vorhersagevorrichtung (102) aus den ausgewählten Deskriptoren,

wobei die Anweisung des Auswählens der relevanten Anzahl von den bestklassifizierten Deskriptoren die folgenden Anweisungen aufweist zum:

- Auswählen einer Vorhersagefunktion (*f*);
- Anwenden eines Lernprozesses für unterschiedliche beliebige Anzahlen von bestklassifizierten Deskriptoren, welche spezifisch für die Vorhersagefunktion (*f*) ist, welche ausgewählt ist, um die Parameter der Vorhersagefunktion (*f*) zu ermitteln, um die Vorhersage der Eigenschaft (110) zu optimieren;
- Berechnen einer Funktion der Auswahl (*g*) der Anzahl der Deskriptoren aus den ermittelten Parametern der Vorhersagefunktion (*f*) für die unterschiedlichen beliebigen Anzahlen von bestklassifizierten Deskriptoren; und
- Auswählen der Anzahl der bestklassifizierten Deskriptoren, welche die Funktion der Auswahl (*g*) optimieren.

11. Vorrichtung (120) zur Erstellung einer Vorhersagevorrichtung (102) zum Vorhersagen einer biologischen, klinischen oder demografischen Eigenschaft (110) eines Individuum (108) aus bildgebenden Daten (106) des Individuums (108), **dadurch gekennzeichnet, dass** sie aufweist:

- ein bildgebendes Gerät (122); und
- ein Datenverarbeitungssystem (124) aufweisend:
- Mittel (126) zum Ermitteln von bildgebenden Deskriptoren, wobei diese Mittel (126) aufweisen:

- Mittel (128) zum Aufnehmen von mehrdimensionalen Bildern von Individuen (130) mittels des bildgebenden Geräts (122); und
- Mittel (132) zum Extrahieren von Elementen von mehrdimensionalen Bildern aus den aufgenommen mehrdimensionalen Bildern, wobei diese extrahierten Elemente Deskriptoren sind;
- Mittel zum Verketten der Deskriptoren in einer ermittelten Reihenfolge;
- Mittel (134) zum Klassifizieren der ermittelten Deskriptoren in Bezug auf ihre Fähigkeit zur Vorhersage der Eigenschaft (110);
- Mittel (136) zum Auswählen einer relevanten Anzahl von den bestklassifizierten Deskriptoren aus den klassifizierten Deskriptoren, welche für die Vorhersage der Eigenschaft (110) ausreichend ist, wobei diese Mittel Mittel zum Kalibrieren einer Funktion der Auswahl der Anzahl an Deskriptoren auf zufällig vertauschten Daten aufweisen; und
- Mittel zum Erstellen einer Vorhersagevorrichtung (102) aus den ausgewählten Deskriptoren,

wobei die Mittel (138) des Auswählens Mittel aufweisen zum:
- Auswählen einer Vorhersagefunktion (*f*);
- Anwenden eines Lernprozesses für unterschiedliche beliebige Anzahlen von bestklassifizierten Deskriptoren, welche spezifisch für die Vorhersagefunktion (*f*) ist, welche ausgewählt ist, um die Parameter der Vorhersagefunktion (*f*) zu ermitteln, um die Vorhersage der Eigenschaft (110) zu optimieren;
- Berechnen einer Funktion der Auswahl (*g*) der Anzahl der Deskriptoren aus den ermittelten Parametern der Vorhersagefunktion (*f*) für die unterschiedlichen beliebigen Anzahlen von bestklassifizierten Deskriptoren; und
- Auswählen der Anzahl der bestklassifizierten Deskriptoren, welche die Funktion der Auswahl (*g*) optimieren.

## Claims

1. A method for developing a prediction device (102) for predicting a biological, clinical or demographic trait (110) of a person (108) from imaging data (106) of said person (108), **characterized in that** it comprises the following steps:

- determining imaging descriptors (step 10), said step including the following steps:

- acquiring multidimensional images of people (130) by means of an imaging apparatus (122) (step 20); and
- extracting multidimensional image elements from the acquired multidimensional images to serve as descriptors (step 24);

- classifying the predetermined descriptors on the basis of the capability thereof to predict said trait (110) (step 12);
- selecting, from among the classified descriptors, a relevant number of the best-classified descriptors that is sufficient to predict said trait (110) (step 14), said step comprising a step for calibrating a selection function of the number of descriptors on randomly permutated data (step 31); and
- constructing the prediction device (102) from the selected descriptors (step 16), the step for selecting the relevant number of best-classified descriptors (step 14) comprises the following steps:

- selecting a predictive function (*f*) (step 30);
- applying, for any different numbers of best-classified descriptors, a learning procedure specific to the predictive function (*f*) chosen so as to determine parameters of the predictive function (*f*) (step 32) so as to optimize the prediction of said trait (110);

- calculating, for said any different numbers of best-classified descriptors, a selection function (*g*) for the number of descriptors from parameters of the determined predictive function (*f*) (step 34); and
- selecting the number of best-classified descriptors that optimizes the selection function (*g*) (step 36).

2. The method according to claim 1, **characterized in that** the step for computing the selection function (*g*) (step 34) is based on a combination of a term for adjusting to the data of the predictive function (*f*) penalized by a term that depends on the complexity of the predictive function (*f*).

3. The method according to claim 1 or 2, **characterized in that** the step for selecting the predictive function (*f*) (step 30) is based on a generative approach or a discriminating approach.

4. The method according to any one of claims 1 to 3, **characterized in that** the acquired multidimensional images are three-dimensional images and **in that** the image elements are voxels.

5. The method according to claim 4, **characterized in that** the three-dimensional image acquisition step (step 20) is done by positron emission tomography and/or by nuclear magnetic resonance.

6. The method according to any one of claims 1 to 5, **characterized in that** the step for determining descriptors (step 10) comprises a step for pre-processing the acquired multidimensional images (step 22).

7. The method according to any one of claims 1 to 6, **characterized in that** the step for classifying the descriptors (step 12) leads to a list of overlapping descriptor subsets.

8. The method according to claim 7, **characterized in that** the step for classifying the descriptors (step 12) is done using univariable methods such as a T test, an F test or an ROC analysis.

9. A use of a prediction device (102) developed using a method according to any one of claims 1 to 8 to predict the response of a person (108) to treatment by transcranial magnetic stimulation from multidimensional images (106) of said person's (108) brain.

10. An information storage medium (140) comprising a code (142) for developing a prediction device (102) intended to predict a biological, clinical or demographic trait (110) of a person (108) from imaging data (106) of said person (108), **characterized in that** the code (142) comprises instructions to:

- determine imaging descriptors, said instruction comprising instructions to:

- acquire multidimensional images of people (130) by means of an imaging apparatus (122); and
- extract multidimensional image elements from the acquired multidimensional images to serve as descriptors;

- classify the predetermined descriptors on the basis of the capability thereof to predict said trait (110);
- select, from among the classified descriptors, a relevant number of the best-classified descriptors that is sufficient to predict said trait (110), said instruction comprising an instruction to calibrate a function for selecting the number of descriptors on randomly permutated data; and
- construct the prediction device (102) from the selected descriptors, the instructions to select the relevant number of best-classified descriptors comprises the following instructions to:

- select a predictive function (*f*);
- apply, for any different numbers of best-classified descriptors, a learning procedure specific to the predictive function (*f*) chosen so as to determine parameters of the predictive function (*f*) so as to optimize the prediction of said trait (110);

- calculate, for said any different numbers of best-classified descriptors, a selection function (*g*) for the number of descriptors from parameters of the determined predictive function (*f*); and
- select the number of best-classified descriptors that optimizes the selection function (*g*).

11. An apparatus (120) for developing a prediction device (102) intended to predict a biological, clinical or demographic trait (110) of a person (108) from imaging data (106) of that person (108), **characterized in that** it comprises:

- an imaging apparatus (122); and
- a data processing system (124) comprising:

- means (126) for determining imaging descriptors, said means (126) comprising:

- means (128) for acquiring multidimensional images of people (130) by means of said imaging apparatus (122); and
- means (132) for extracting multidimensional image elements from the acquired multidimensional images to serve as descriptors; - means (134) for classifying the predetermined descriptors on the basis of the capability thereof to predict said trait (110);
- means (136) for selecting, from among the classified descriptors, a relevant number of the best-classified descriptors that is sufficient to predict said trait (110), said means comprising means for calibrating a selection function for the number of descriptors on randomly permutated data; and

- means (138) for constructing the prediction device (102) from the selected descriptors,

the means for selecting comprising means for:

- selecting a predictive function (*f*);
- applying, for any different numbers of best-classified descriptors, a learning procedure specific to the predictive function (*f*) chosen so as to determine parameters of the predictive function (*f*) so as to optimize the prediction of said trait (110);
- calculating, for said any different numbers of best-classified descriptors, a selection function (*g*) for the number of descriptors from parameters of the determined predictive function (*f*); and
- selecting the number of best-classified descriptors that optimizes the selection function (*g*).

## FIG.1

## FIG.2

```
┌──────────┐
│   -10-   │
└──────────┘
      │
      ▼
┌──────────┐
│   -12-   │
└──────────┘
      │
      ▼
┌──────────┐
│   -14-   │
└──────────┘
      │
      ▼
┌──────────┐
│   -16-   │
└──────────┘
```

## FIG.3

```
┌──────────┐  ┐
│   -20-   │  │
└──────────┘  │
      │       │
      ▼       │
┌──────────┐  ├ 10
│   -22-   │  │
└──────────┘  │
      │       │
      ▼       │
┌──────────┐  │
│   -24-   │  ┘
└──────────┘
```

## FIG.4

```
┌──────────┐  ┐
│   -30-   │  │
└──────────┘  │
      │       │
      ▼       │
┌──────────┐  │
│   -31-   │  │
└──────────┘  │
      │       │
      ▼       │
┌──────────┐  │
│   -32-   │  ├ 14
└──────────┘  │
      │       │
      ▼       │
┌──────────┐  │
│   -34-   │  │
└──────────┘  │
      │       │
      ▼       │
┌──────────┐  │
│   -36-   │  ┘
└──────────┘
```

## FIG.5

## FIG.6

FIG.7

FIG.8A

FIG.8B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LICHEN LIANG et al.** *Spatial SVM for feature selection and fMRI activation detection*
- **JULIA NEUMANN et al.** *Combined SVM-based feature selection and classification*
- **YONG FAN et al.** *Detecting cognitive states from fMRI images by machine learning and multivariate classification*
- **ANDREW WEBB.** statistical pattern recognition. Oxford University Press
- **MOURAO-MIRANDA et al.** *Classifying brain states and determining the discriminating activation patterns: Support Vector Machine on functional MRI data*
- **LUTS et al.** *A combined MRI and MRSI based multiclass system for brain tumour recognition using LS-SVMs with class probabilities and feature selection*
- **Y.-W. CHEN ; C.-J. LIN.** *Combining SVMs with various feature selection strategies*
- **MIKOLAJCZYK et al.** *A performance evaluation of local descriptors*